# EUROPÄISCHE PATENTSCHRIFT

(11) **EP 2 303 697 B1**
(45) Veröffentlichungstag und Bekanntmachung des Hinweises auf die Patenterteilung: **19.12.2012**
(21) Anmeldenummer: 09775959.1
(22) Anmeldetag: 09.07.2009
(51) Int. Cl.: B64F 1/22

(54) **AUTOMATISCHES SYSTEM ZUM MANÖVRIEREN VON LUFTFAHRZEUGEN AM BODEN**
AUTOMATIC SYSTEM FOR MANOEUVRING AIRCRAFT ON THE GROUND
SYSTÈME AUTOMATIQUE UTILISÉ POUR LA MANOEUVRE D'AÉRONEFS AU SOL

(30) Priorität: 29.07.2008 DE 102008035342
(43) Veröffentlichungstag der Anmeldung: 06.04.2011
(73) Patentinhaber: Becker, Andreas, 42897 Remscheid (DE); Bergerhoff, Eckhard, 51377 Leverkusen (DE)
(72) Erfinder: Becker, Andreas, 42897 Remscheid (DE)
(86) Internationale Anmeldenummer: PCT/DE2009/000974
(87) Internationale Veröffentlichungsnummer: WO 2010/012261

(56) Entgegenhaltungen:
- EP-A2- 0 206 038
- FR-A1- 2 675 919
- GB-A- 527 994
- US-A- 5 845 975
- US-A1- 2008 083 851
- US-B1- 6 305 484

## Beschreibung

Die Erfindung betrifft ein automatisches System zum Manövrieren von Luftfahrzeugen am Boden, basierend auf fahrerlosen Fahrzeugen zum Manövrieren von Luftfahrzeugen, im folgenden AGTV's genannt, die die Luftfahrzeuge selbstständig am Fahrwerk aufnehmen können, um diese zu schleppen bzw. zu schieben mit einem rechnergestützten Leit- und Managementsystem zum kollisions- und konfliktfreien Routing der AGTV's. AGTV's im Sinne der vorliegenden Erfindung sind Automated Guided Towing Vehicles.

Es sind Schleppfahrzeuge zum Schleppen von Flugzeugen ohne Schleppstange (DE 19734238A1), (DE 3534045A1), (DE4415405C3), (US5308212) bekannt, bei denen die Bedienung der Aufnahmevorrichtung und die Fahrtätigkeit von einem Fahrer übernommen wird. Aufgrund des Personalbedarfs und der umfangreichen Kommunikation mit der Vorfeldkontrolle werden Schleppfahrzeuge der genannten Art derzeit lediglich zum Push-Back sowie für Gate-to-Gate- und Wartungsschlepps eingesetzt.

Das Dokument US2008/083851A1 beschreibt ein unbemanntes Fahrzeug (100), welches, durch Sensoren (142, 146) an der Aufnahmevorrichtung für das Bugfahwerk (20) des Flugzeugs, Eingriffe der Piloten durch Lenken des Bugfahrwerk (20) und Bremsen des Hauptfahrwerks in den Schleppvorgang ermöglicht. Darüber hinaus kann sich das Fahrzeug (100), gesteuert von einen zentralen Kontrollsystem (250), unbemannt auf den Rollwegen bewegen. Weiterhin offenbart D1 eine spezielle, durch Sensoren überwachte, Art der Aufhängung einer Aufnahmevorrichtung im Fahrzeug, die das Bugfahrwerk während dem Schleppen schont

Das Dokument US6305484B1 beschreibt automatisches Fahrzeug (10) zum Schleppen von Flugzeugen (12), bei dem Fahrzeug (10) und Flugzeug (12) durch eine Schleppstange (14) verbunden sind.

Das Dokument EP0206038A2 beschreibt ein sichtunabhängiges Leitsystem für alle Arten von Fahrzeugen auf Flughäfen.

Das Dokument FR2675919A1 beschreibt eine Anordnung zum automatischen Schleppen von Flugzeugen, bestehend aus einem Fahrzeug (A), welches durch eine Schleppstange (40) und ein Interface-Fahrzeug (B) mit einem Flugzeug verbunden ist

Aus der FR2675919A1 ist ein gattungsgemäßes System bekannt, bei welchem zwischen dem Schleppfahrzeug und dem Fahrgestell des Luftfahrzeugs ein Stangensystem mit mindestens zwei Gelenkstellen vorgesehen ist, sodass die Möglichkeiten, in beiden Fahrtrichtungen zu manövrieren, zumindest in der Fahrtrichtung rückwärts erheblich erschwert werden.

Das Dokument US5845975 beschreibt ein Bremsen schonendes System für Flugzeuge, bei dem einzelne Bremsen des Flugzeugs, je nach Aufsetzpunkt des Flugzeugs auf der Landebahn, zu- oder abgeschaltet werden können. Die Übermittlung des Aufsetzpunktes an das Bremssystem des Flugzeugs erfolgt dabei drahtlos von einer Bodenstation.

Der Erfindung liegt die Aufgabe zugrunde, Schleppfahrzeuge der genannten Art so eiterzubilden, dass sie funktionell und organisatorisch in der Lage sind, Fahraufträge fahrerlos und sicher durchzuführen. Die damit verbundene Einsparung an Personal und verbaler Kommunikation sowie die Automatisierung von Führungs- und Kontrollaufgaben ermöglicht eine Erweiterung des Einsatzgebietes dieser Fahrzeuge zum Bewegen von Luftfahrzeugen am Boden von der Landung bis zum Start, was sich vorteilhaft auf den Treibstoffverbrauch der Luftfahrzeuge auswirkt und eine Reduktion von Abgas- und Lärmemissionen in der Umgebung von Verkehrsfandeplätzen zur Folge hat. Außerdem ist das rechnergestützte Routing der AGTV's vorteilhaft für die Vermeidung von Unfällen durch menschliches Versagen und Missverständnissen bei der verbalen Kommunikation.

Die erfindungsgemäße Lösung der Aufgabe ist im Anspruch 1 wiedergegeben. Die Unteransprüche 2 bis 7 beziehen sich auf vorteilhafte Ausgestaltungen der Erfindung.

Bei dem erfindungsgemäßen System sind Schleppfahrzeuge der genannten Art mit einem Navigationssystem ausgestattet, welches es dem Schleppfahrzeug ermöglicht, fahrerlos auf einem Verkehrslandeplatz zu navigieren und selbstständig Fahr- bzw. Schleppaufträge auszuführen. Die Navigation erfolgt dabei durch optische oder induktive Verfahren, durch Transponder, Magnetmarken, GPS oder aus einer Kombination der genannten Verfahren. Die fahrerlosen AGTV's erhalten ihre Fahr- bzw. Schleppaufträge von einem rechnergestützten Leit- und Managementsystem, welches die AGTV's kollisions- und konfliktfrei steuert.

Die Erfindung ist im Folgenden anhand eines in den Zeichnungen dargestellten Ausführungsbeispiels erläutert. Es zeigt:

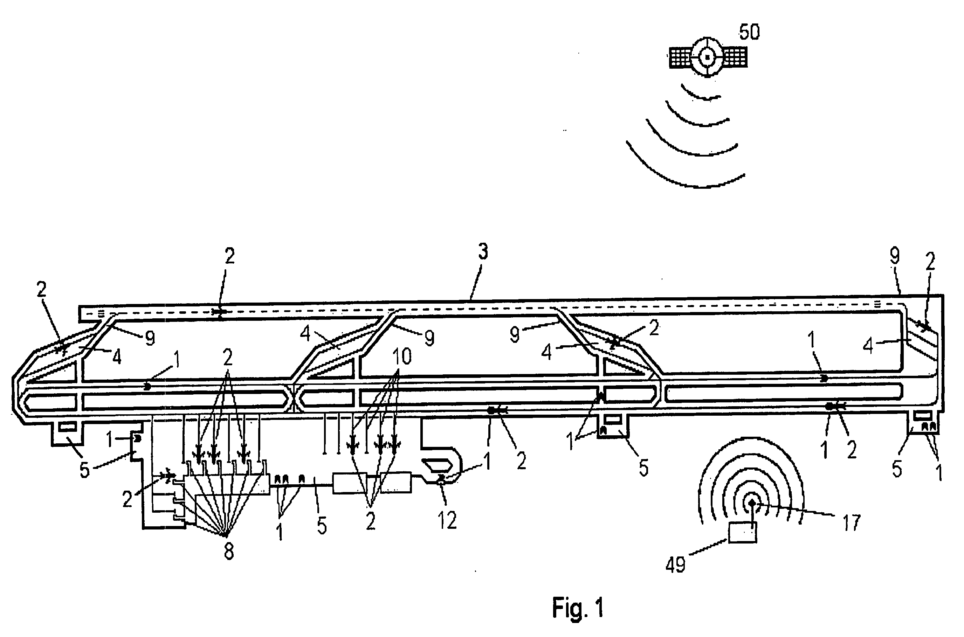

***Fig. 1*** beispielhaft und nicht beschränkend einen Verkehrslandeplatz mit einem automatischen System zum Manövrieren von Luftfahrzeugen am Boden;

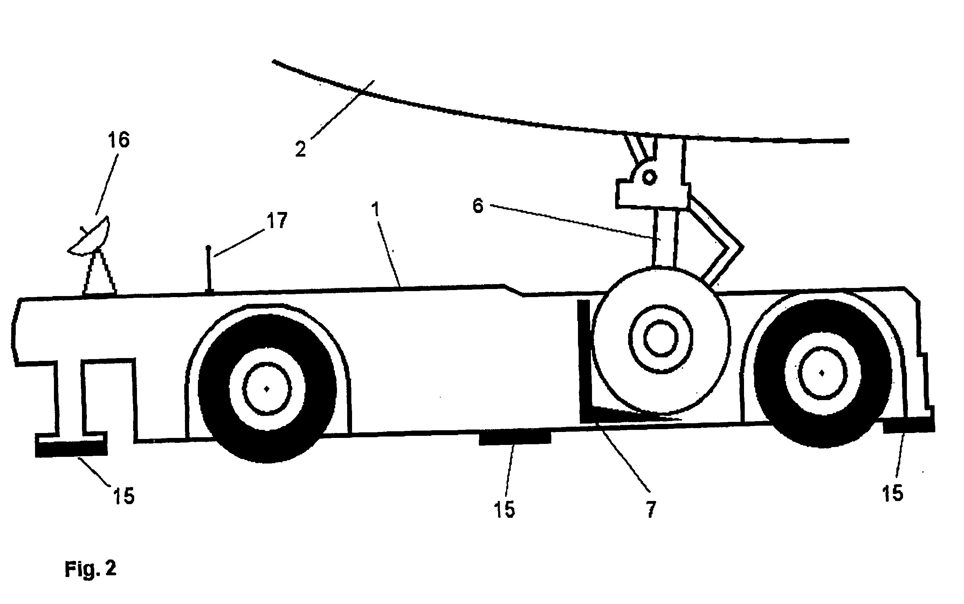

***Fig. 2*** ein fahrerloses Fahrzeug zum Manövrieren von Luftfahrzeugen (AGTV) mit einer Vorrichtung zum selbstständigen Aufnehmen des Fahrwerks eines Luftfahrzeuges;
***Fig. 3a*** bis 3c beispielhaft und nicht beschränkend verschiedene Lenkmodi zur Verbesserung der Manövrierbarkeit eines AGTV;

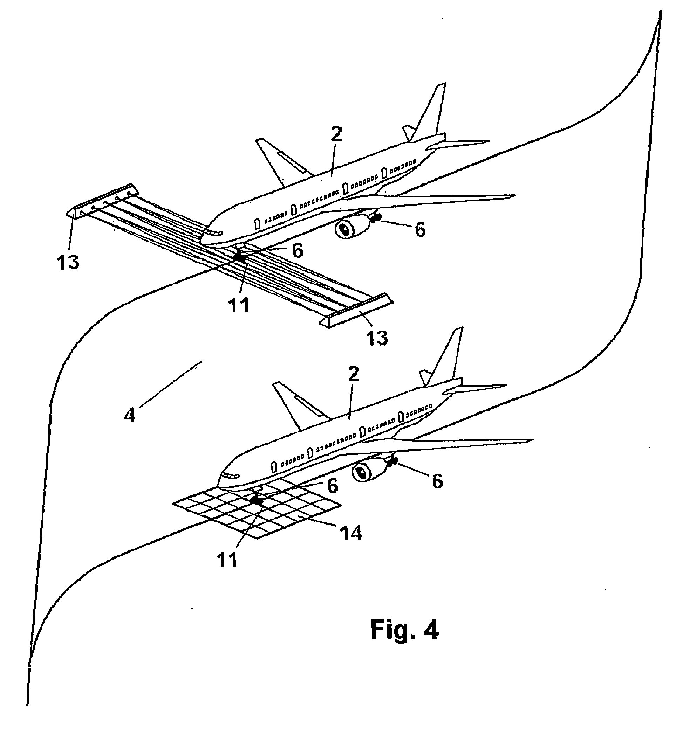

***Fig. 4*** eine Übergabefläche mit ortsfesten Sensoren zur besseren Lokalisierung der Fahrwerke der Luftfahrzeuge;

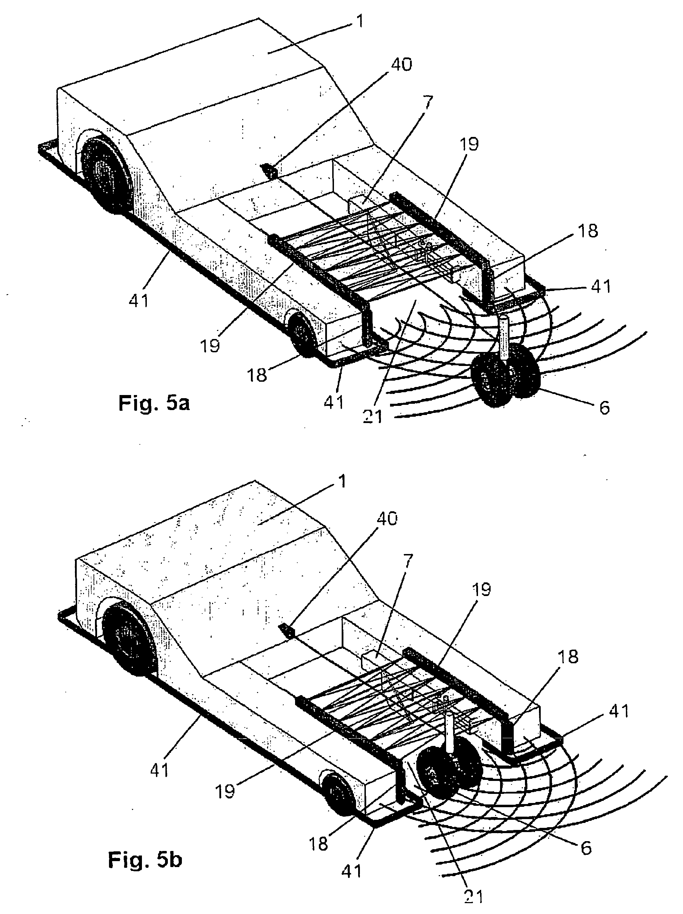

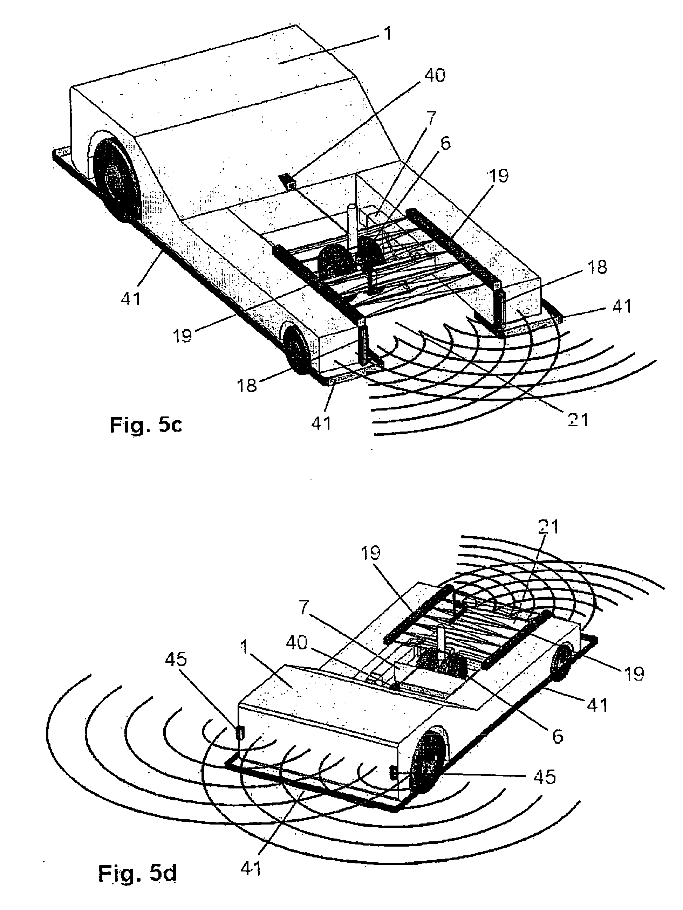

***Fig.* 5a *bis 5d*** ein fahrerloses Fahrzeug zum Manövrieren von Luftfahrzeugen (AGTV) mit verschiedenen Sensorsystemen zur sicheren Annäherung an das Fahrwerk eines Luftfahrzeugs, zur präzisen Positionierung des Fahrwerks in der Aufnahmevorrichtung, zum rechtzeitigen Erkennen von Hindernissen und zur Vermeidung von Kollisionen;

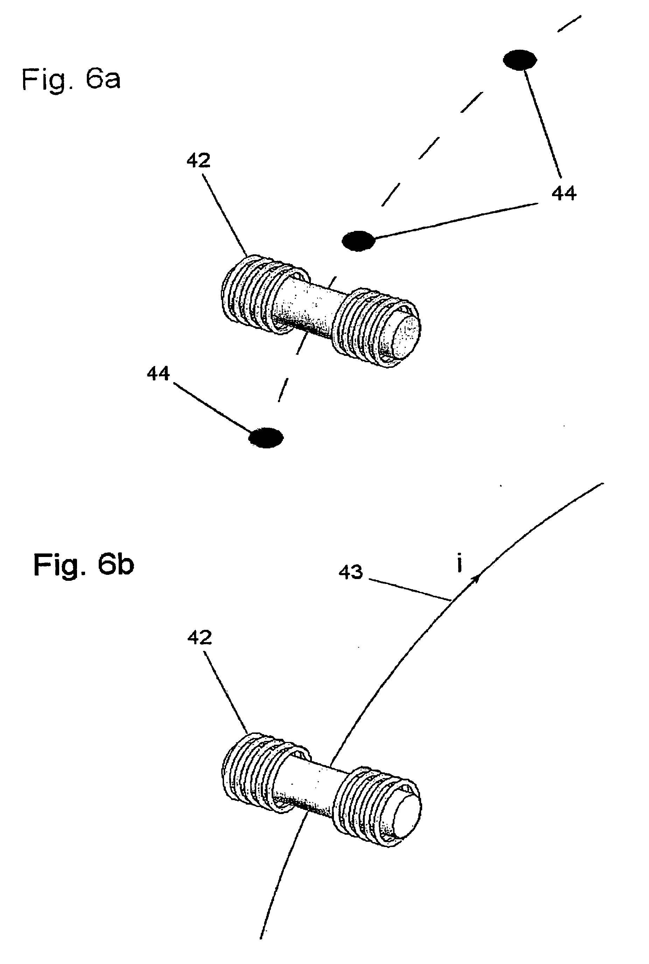

***Fig. 6a*** und 6b ein magnetisches bzw. induktives Verfahren zur Steuerung fahrerloser Fahrzeuge zum Manövrieren von Luftfahrzeugen (AGTV's);

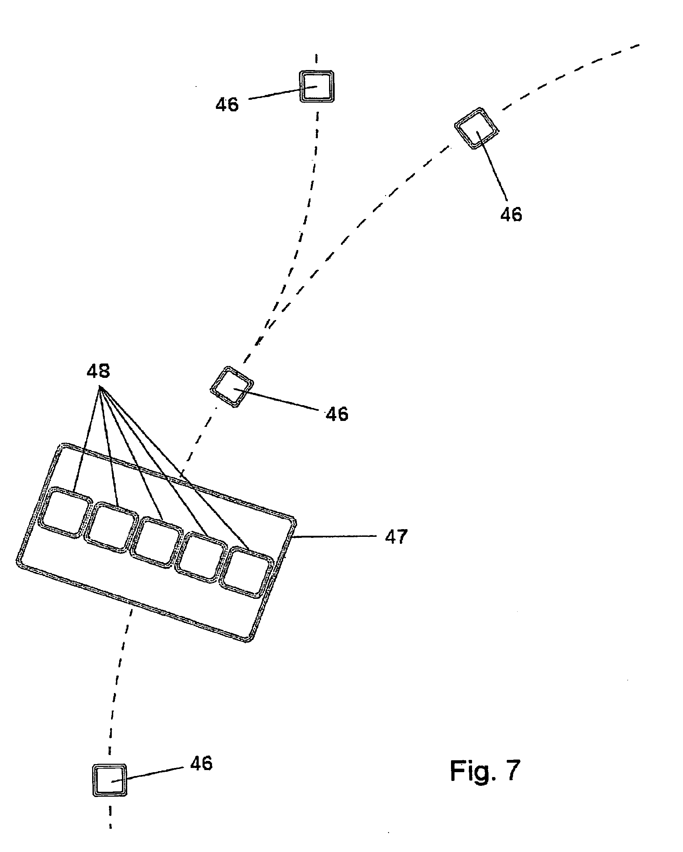

***Fig. 7*** ein Verfahren zur Steuerung fahrerloser Fahrzeuge zum Manövrieren von Luftfahrzeugen (AGTV's) durch Transponder;

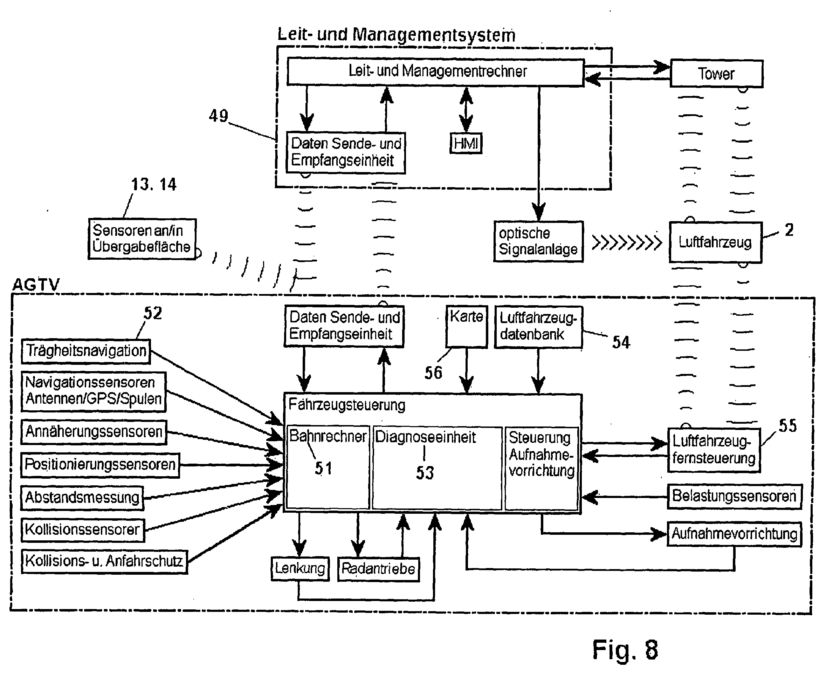

***Fig. 8*** prinzipiell den Aufbau einer Steuerung für ein automatisches System zum Manövrieren von Luftfahrzeugen am Boden.

Die Funktion des Systems ist wie folgt:
Nach der Landung rollt das Luftfahrzeug **(2)** auf Übergabeflächen **(4),** welche sich am Anfang und Ende sowie an den Auf- bzw. Abrollbahnen **(9),** der Start- bzw. Landebahn **(3)** befinden. Dabei folgt es den auf Verkehrslandeplätzen üblichen Markierungen, um auf einer der Übergabeflächen **(4)** an einer definierten Übergabeposition **(11)** zu stoppen. Hier werden nach Ablauf der vom Hersteller des Luftfahrzeugs vorgegebenen "spool-down time" die eigenen Antriebe abgeschaltet. Das Bedienpersonal des Leit- und Managementsystems **(49)** gibt jetzt den zuvor in das System eingegebenen Schleppauftrag frei. Ein Schleppauftrag enthält mindestens die genaue Bezeichnung der Übergabeposition **(11)** des Luftfahrzeugs, den Typ des Luftfahrzeugs sowie die Ziel-/Parkposition. Das Leit- und Managementsystem **(49)** wählt nun ein für den Luftfahrzeugtyp geeignetes und freies AGTV **(1)** aus und leitet dieses von einem Bereitstellungsraum **(5)** bzw. seinem aktuellen Standort selbstständig zur Übergabeposition **(11).** Die dabei benutzte Route kann, abhängig vom verwendeten Navigationsverfahren statisch sein oder vom Leit- und Managementsystem **(49)** dynamisch berechnet werden. In beiden Fällen wird vom Leit- und Managementsystem **(49)** eine Route ermittelt, die sowohl geographisch als auch zeitlich disjunkt ist, damit Kollisionen und Konflikte mit anderen AGTV's **(1)** ausgeschlossen sind. Dabei werden sowohl die Dimensionen der AGTV's **(1),** der bewegten Luftfahrzeugtypen sowie das damit verbundene unterschiedliche Abbiegeverhalten berücksichtigt.

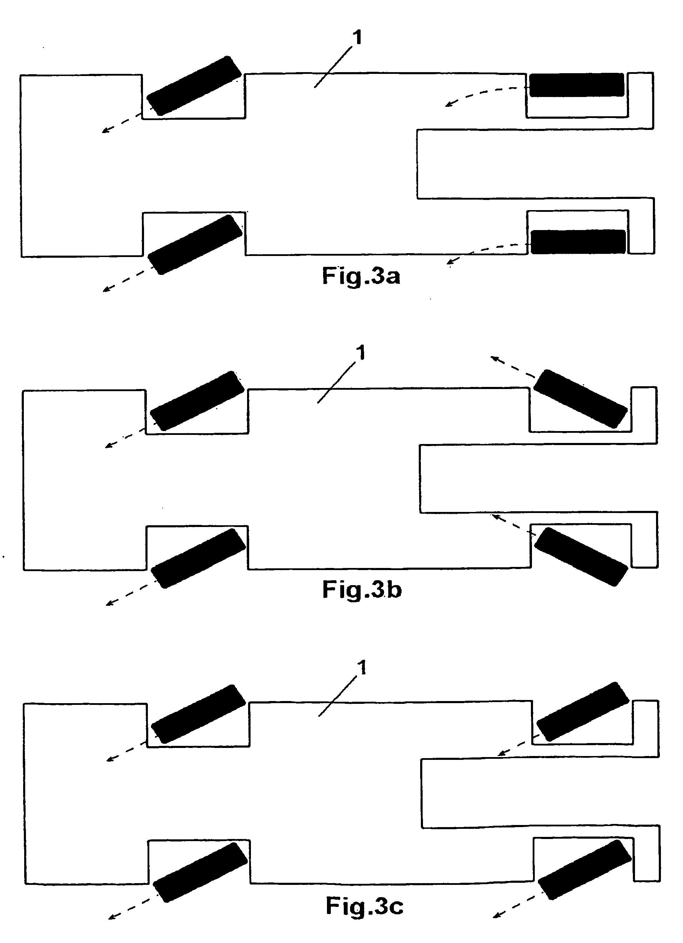

Nachdem das AGTV **(1)** die Übergabeposition **(11)** erreicht und sich ausgerichtet hat, fährt es an das Fahrwerk **(6)** des Luftfahrzeugs **(2)** heran, so dass die Aufnahmevorrichtung **(7)** das Fahrwerk **(6)** selbstständig einziehen kann. Je nach verwendetem Navigationssystem wird die Annäherung an das Fahrwerk **(6)** des Luftfahrzeugs **(2)** durch Annäherungssensoren **(18)** am AGTV **(1)** und/oder durch ortsfeste Sensoren an **(13)** und/oder in **(14)** der Übergabefläche **(4)** unterstützt. Die Sensoren **(13)** an der Übergabefläche **(4)** erzeugen dazu ein Messgitter, dass die Bestimmung der genauen Übergabeposition **(11)** des Fahrwerks **(6)** des Luftfahrzeugs **(2)** auf der Übergabefläche **(4)** erlaubt. Induktiv, kapazitiv und/oder belastungsabhängig wirkende Sensoren **(14)** in der Übergabefläche **(4)** ermöglichen ebenfalls eine genaue Bestimmung der Übergabeposition **(11)** des Fahrwerks **(6)** des Luftfahrzeugs **(2)** auf der Übergabefläche **(4).** Die Verwendung von ortsfesten Sensoren an **(13)** und/oder in **(14)** der Übergabefläche **(4)** ist sowohl einzeln als auch in Kombination möglich. Die endgültige Ausrichtung des AGT's **(1)** mit der Aufnahmevorrichtung **(7)** am Fahrwerk **(6)** des Luftfahrzeugs **(2)** erfolgt nach der Annäherung mit Hilfe von Positionierungssensoren **(19)** und einer Einrichtung zu Abstandsmessung **(40).** Die Positionierungssensoren **(19)** erzeugen dazu ein Messgitter, dass die Bestimmung der genauen Position des Fahrwerks **(6)** des Luftfahrzeugs **(2)** im Aufnahmeraum **(21)** des AGTVs **(1)** ermöglicht. Die Abstandsmessung **(40)** erfolgt durch Radar, Laser oder Ultraschall basierende Messsysteme oder aus einer Kombination der verschiedenen Messsysteme. Ein Radar basierendes Messsystem ist besonders vorteilhaft, da es neben der Abstandsmessung auch Positionsdaten für die Annäherung des AGTVs **(1)** an das Fahrwerk **(6)** des Luftfahrzeugs **(2)** liefert. Ebenso ist die Verwendung von Bilderkennungssystemen vorteilhaft bei der genauen Bestimmung von Position und Lage des Aufnahmeraums **(21)** im AGTV **(1)** relativ zum Fahrwerk **(6)** des Luftfahrzeugs **(2).** Situationsbedingt umschaltbare Lenkmodi, wie in **Fig. 3a** bis **3c** gezeigt, erleichtern das präzise Annähern des AGTV's **(1)** an das Fahrwerk **(6)** des Luftfahrzeugs **(2)** und ermöglichen weiterhin eine bessere Manövierfähigkeit beim Zurückschieben des Luftfahrzeugs **(2)** von einer Ziel-/Parkposition oder von einem Fluggaststeig **(8).**

Ist das Luftfahrzeug **(2)** vom AGTV **(1)** aufgenommen worden, wird dem Luftfahrzeugführer durch eine Signaleinrichtung an der Übergabefläche **(4)** signalisiert, dass er die Lenkmechanik des Luftfahrzeugs **(2)** entriegeln und die Bremsen lösen muss. Wahlweise ist auch die Ausrüstung des AGTV's **(1)** und des Luftfahrzeugs mit einer drahtlosen Kommunikations- und Fernsteuerungseinheit **(55)** möglich, so dass das AGTV **(1)** die Ent- und Verriegelung der Lenkmechanik sowie das Lösen und Feststellen der Bremsen des Luftfahrzeugs **(2)** selbstständig steuern kann. Dann wird das Gespann vom Leit- und Managementsystem **(49)** von der Übergabeposition **(11)** zum Beispiel zu einem Fluggaststeig **(8)** oder einer Außenposition **(10)** geführt. Nach der Durchführung des Schleppauftrags setzt das AGTV **(1)** das Luftfahrzeug **(2)** wieder ab. Je nach Bedarf beordert das Leit- und Managementsystem **(49)** nun das AGTV **(1)** zum nächsten Schleppauftrag oder in einen Bereitstellungsraum **(5)** oder belässt es am Luftfahrzeug **(2).** Nach der Abfertigung des Luftfahrzeugs **(2)** wird dieses wieder von einem AGTV **(1)** aufgenommen und zu einer Übergabefläche **(4)** geschleppt, wo kurz vor der Startfreigabe die eigenen Antriebe des Luftfahrzeugs **(2)** angelassen werden und die vom Hersteller des Luftfahrzeugs vorgegebene "spool-up time" abgewartet wird, bevor es mit eigenem Antrieb zur Startbahn rollt.

Für die Steuerung der AGTV's **(1)** stehen grundsätzlich mehrere Navigationsverfahren zu Verfügung, die sowohl eigenständig als auch in Kombination eingesetzt werden können.

Transponder **(46)** bieten als Wegmarken große Vorteile. Zum einen erlauben sie die Speicherung von Informationen im Fahrweg, zum anderen ermöglichen ihre unterschiedlichen Bauformen eine Aufbringung auf den Fahrweg ohne baulichen Aufwand. Zur Steuerung eines AGTV's **(1)** ist neben den im Transponder **(46)** gespeicherten Informationen auch seine Lage von Bedeutung. Im Falle einer Transponder-Steuerung bestehen die unter dem AGTV **(1)** befindlichen Navigationssensoren **(15)** aus Schreib-/Leseantennen **(47)** zum Auswerten der in den Transpondern **(46)** gespeicherten Informationen sowie aus Antennenarrays **(48),** mit denen die Lage des Maximums des Transpondersignals bestimmt wird, woraus sich die Lage des Transponders **(46)** quer zum Fahrweg ergibt. Mit den Informationen aus einem überfahrenen Transponder **(46),** seiner genauen Lage unter dem AGTV **(1)** und einer im Bahnrechner **(51)** gespeicherten Karte **(56)** vom Verkehrslandeplatz wird jeweils der nächste Transponder **(46)** auf dem aktuellen Fahrweg angefahren.

Beim Einsatz eines Satellitennavigationssystems **(50)** wird die aktuelle Position des AGTV's **(1)** kontinuierlich von seiner Navigationsantenne **(16)** empfangen und an den Bahnrechner **(51)** weitergeleitet. Aus der vom Satellitennavigationssystem **(50)** empfangenen Position und einer im Bahnrechner **(51)** gespeicherten Karte **(56)** vom Verkehrslandeplatz wird dann der weitere Fahrweg ermittelt. Zur Erhöhung der Genauigkeit der Positionsbestimmung ist eine ortsfeste Referenzstation in der Nähe der Fahrwege vorteilhaft.

Bei der Magnetmarken-Steuerung werden Magnetstreifen bzw. Magnetmarken **(44)** entlang des Fahrwegs aufgebracht. Ihre Bauform ermöglicht ebenfalls eine Aufbringung auf den Fahrweg ohne baulichen Aufwand. Als Navigationssensoren **(15)** dienen Spulen **(42),** mit denen die Lage des Maximums des Magnetfeldes der Magnetmarken **(44)** bestimmt wird, woraus sich die Lage der Magnetmarken **(44)** quer zum Fahrweg ergibt. Mit den Informationen der genauen Lagen der Magnetmarken **(44)** unter dem AGTV **(1)** und einer im Bahnrechner **(51)** gespeicherten Karte **(56)** vom Verkehrslandeplatz werden die nächste Magnetmarken **(44)** auf dem aktuellen Fahrweg angefahren.

Die Induktive-Steuerung funktioniert identisch wie die Magnetmarken-Steuerung, jedoch sind die Magnetstreifen bzw. Magnetmarken **(44)** durch einen Strom führenden Draht, den Leitdraht **(43),** ersetzt. Diese Methode erlaubt dem Bahnrechner **(51)** eine kontinuierliche Kurskorrektur ohne die Verwendung einer Karte **(56)** vom Verkehrslandeplatz.

Bei den Navigationsverfahren, bei denen der Fahrweg zwischen zwei Wegmarken interpoliert werden muss sowie bei der Satellitennavigation ist ein zusätzliches Trägheitsnavigationssystem **(52)** im AGTV **(1)** vorteilhaft, aber nicht zwingend. Ein Trägheitsnavigationssystem **(52)** erhöht die Genauigkeit der Steuerung des AGTV **(1)** und ermöglicht außerdem Kurskorrekturen zwischen zwei Wegmarken. Darüber hinaus hilft ein Trägheitsnavigationssystem **(52)** bei der Interpolation des Fahrwegs im Falle des Ausfalls einzelner Wegmarken, diese zu überspringen und die nächste funktionsfähige Wegmarke anzufahren.

Alle für den Schleppvorgang relevanten luftfahrzeugspezifischen Informationen, wie zum Beispiel maximale Beschleunigung, maximale Verzögerung, Abbiegeradien, usw. sind in einer Luftfahrzeugdatenbank **(54)** in der Fahrzeugsteuerung gespeichert. Die Verfügbarkeit der luftfahrzeugspezifischen Informationen direkt in der Fahrzeugsteuerung des AGTV **(1)** reduziert den Datenverkehr zwischen AGTV **(1)** und dem Leit- und Managementsystem **(49)** erheblich.

Das Leit- und Managementsystem **(49)** besteht aus einem oder mehreren Rechner(n), der/die das kollisions- und konfliktfreie Routing der AGTV **(1)** auf dem gesamten Verkehrslandeplatz übernimmt/-nehmen sowie einem oder mehreren Bildschirmarbeitsplätzen (HMI's), von denen aus das Bedienpersonal das System bedient und überwacht. Das Leit- und Managementsystem **(49)** ist vorteilhafterweise mit den Systemen der Flugsicherung bzw An- und Abflugkontrolle vemetzt, so dass die benötigten Informationen über im Anflug befindliche Luftfahrzeuge **(2)** direkt in das Leit- und Managementsystem **(49)** übernommen werden können bzw. Informationen über startbereite Luftfahrzeuge **(2)** direkt an die Abflugkontrolle übergeben werden können. Die Kommunikation zwischen dem Leit- und Managementsystem **(49)** und den AGTV's **(1)** erfolgt drahtlos über eine Funkantenne **(17).**

Im Leit- und Managementsystem **(49)** werden außerdem alle Daten über den aktuellen Status jedes einzelnen AGTV's **(1)** ausgewertet, welche von einer Diagnoseeinheit **(53)** in der Fahrzeugsteuerung gesammelt werden. Die Statusinformationen ermöglichen eine vorbeugende Wartung und rechtzeitige Betankung der AGTV's **(1),** bevor es zu Ausfällen und Betriebsstörungen kommt. Die Erweiterung des Leit- und Managementsystem **(49)** mit einem Softwaremodul zur Simulation eines virtuellen Verkehrslandeplatzes erlaubt die Ausbildung und Schulung des Bedienpersonals, ohne in den realen Betrieb einzugreifen.

Die AGTV's **(1)** verfügen über einen mehrstufigen Kollisionsschutz, der die Erkennung von Hindernissen in jeder Fahrsituation erlaubt. Kollisionssensoren **(45)** im vorderen Teil des AGTV's **(1)** tasten den Fahrweg vor dem Fahrzeug weiträumig ab, um auch bei schneller Fahrt mögliche Hindernisse frühzeitig erkennen zu können. Die AGTV's **(1)** sind zusätzlich mit einem um das Fahrzeug umlaufenden Kollisions- und Anfahrschutz **(41)** ausgestattet. Der Kollisions- und Anfahrschutz **(41)** ist besonders bei langsamer Fahrt wirksam und verhindert Kollisionen speziell bei der Annäherung an die Fahrwerke **(6)** von Luftfahrzeugen **(2)** sowie bei Fahrten in Bereichen, in den mit anderen Fahrzeugen oder Fußgängern zu rechnen ist.

Die AGTV's **(1)** verfügen zusätzlich über einen Hilfsfahrstand, der die Bedienung des AGTV's **(1)** im manuellen Betrieb durch einen Fahrer ermöglicht. Die Option des manuellen Betriebs der AGTV's **(1)** ist vorteilhaft, wenn zum Beispiel die Platzverhältnisse an einem Fluggaststeig **(8)** einen automatischen bzw. sicheren Betrieb nicht zulassen oder ein AGTV **(1)** zur Wartung den Bereich der automatischen Führung durch das Leit- und Managementsystem **(49)** verlassen muss. Der Hilfsfahrstand kann je nach Art und Größe des AGTV's **(1)** ein fest an das AGTV **(1)** gebundener Lenk- und Bedienplatz sein bzw. aus einem kabellosen oder kabelgebundenen tragbaren Lenk- und Bedienpult bestehen.

Für den Antrieb der AGTVs **(1)** sind Diesel-Elektrische oder Diesel-Hydraulische Antriebe besonders vorteilhaft, jedoch nicht beschränkend. Unabhängig von der Antriebsart müssen auch beispielsweise Batterie-Elektrisch angetriebene AGTVs **(1)** nach Ablauf einer bestimmten Betriebszeit wieder betankt bzw. aufgeladen werden. Ein automatisches System zum Manövrieren von Luftfahrzeugen am Boden ist daher zweckmäßigerweise, aber nicht zwingend mit einem System zum automatischen Betanken bzw. Aufladen der AGTVs **(1)** ausgestattet. Es besteht aus einer oder mehreren Stationen **(12),** die die AGTV's bei Bedarf selbstständig anfahren können, um vollautomatisch betankt zu werden. Im Falle einer ausschließlich elektrischen Energieübertragung ist eine dezentrale Lösung mit vollautomatischen Ladestationen an den Parkplätzen innerhalb der Bereitstellungsräume **(5)** vorteilhaft.

## Patentansprüche

1. System zum Manövrieren von Luftfahrzeugen **(2)** am Boden zwischen denjenigen Übergabeflächen **(4),** die sowohl für gelandete als auch für abgefertigte Luftfahrzeuge **(2)** zur Verfügung stehen, und den Ziel-/Parkpositionen die zur Abfertigung der Luftfahrzeuge **(2)** dienen, das System beinhaltend Fahrzeuge **(1),** die dazu geeignet sind, durch optische oder induktive Verfahren, durch Transponder, Magnetmarken, GPS oder aus einer Kombination der genannten Verfahren auf einem Verkehrslandeplatz fahrerlos navigiert und von einem Leit- und Managementsystem kollisions- und konfliktfrei gesteuert zu werden **dadurch gekennzeichnet, dass** die Fahrzeuge **(1)** als stangenlose Schleppfahrzeuge mit einem Aufnahmeraum **(21)** sowie einer Vorrichtung **(7)** zur selbständigen Aufnahme des Fahrgestells **(6)** in den Aufnahmeraum **(21)** des jeweiligen Fahrzeugs **(1)** ausgestattet sind und zum Heranfahren mit ihrem Aufnahmeraum **(21)** an das Fahrgestell **(6)** vorgesehen sind und hierzu Sensorsysteme aufweisen, die ein sicheres Heranfahren der Fahrzeuge **(1)** an das Fahrgestell **(6)** ermöglichen und die eine präzise Positionierung des Fahrgestells **(6)** im Aufnahmeraum **(21)** des Fahrzeugs **(1)** erlauben, wo eine Aufnahmevorrichtung **(7)** vorgesehen ist, die das Fahrgestell **(6)** in den Aufnahmeraum selbständig einzieht.

2. System zum Manövrieren von Luftfahrzeugen **(2)** nach Anspruch 1, **dadurch gekennzeichnet, dass** die Aufnahmevorrichtung **(7)** das Fahrgestell **(6)** durch Sensoren gestützt selbständig einzieht.

3. System zum Manövrieren von Luftfahrzeugen **(2)** nach Anspruch 1, **dadurch gekennzeichnet, dass** Sensoren am Fahrzeug **(1)** und / oder an bzw. in der Übergabefläche **(4)** zur Erhöhung der Positioniergenauigkeit der Fahrzeuge **(1)** bei der Annäherung an die Fahrgestelle **(6)** der Luftfahrzeuge **(2)** vorgesehen sind.

4. System zum Manövrieren von Luftfahrzeugen **(2)** nach Anspruch 1, **dadurch gekennzeichnet, dass** die Achsen der Fahrzeuge **(1)** situationsbedingt zwischen unterschiedlichen Lenkmodi umschaltbar sind.

5. System zum Manövrieren von Luftfahrzeugen **(2)** nach Anspruch 1, **dadurch gekennzeichnet, dass** die Fahrzeuge **(1)** mit einer drahtlosen Kommunikations- und Steuerungseinheit ausgestattet sind, durch die die Fahrzeuge **(1)** alle für die Manöver erforderlichen Funktionen des Luftfahrzeugs **(2),** wie zum Beispiel die Entriegelung der Bugfahrwerkslenkung und das Betätigen der Parkbremse, selbständig steuern können.

6. System zum Manövrieren von Luftfahrzeugen **(2)** nach Anspruch 1, **dadurch gekennzeichnet, dass** die Fahrzeuge **(1)** über einen Hilfsfahrstand verfügen, der ein manuelles Bedienen der Fahrzeuge **(1)** erlaubt.

7. System zum Manövrieren von Luftfahrzeugen **(2)** nach Anspruch 1, **dadurch gekennzeichnet, dass** die Fahrzeuge **(1)** an mindestens einer Station **(12)** automatisch betankbar bzw. aufladbar sind.

## Claims

1. A system for maneuvering aircraft **(2)** on the ground between the transfer areas **(4)** available both for arriving and for departing aircraft **(2)** and the target / parking positions for the ground handling of said aircraft **(2),** the system includes vehicles **(1),** which are suitable to navigate driverless on an airfield by optical or inductive methods, by means of transponders, magnetic markers, GPS, or a combination of the aforesaid methods and which are controlled in a collision- and conflict-free manner by a guidance an management system, **characterized in that** said vehicles **(1)** are outfitted as towbarless towing vehicles comprising a receiving space **(21)** and a device **(7)** for independently receiving the landing gear **(6)** in said receiving space **(21)** of said vehicle **(1),** and are provided to drive up to the landing gear **(6)** with their receiving space **(21)** presented thereto, and are equipped for this purpose with sensor systems that enable said vehicle **(1)** to drive up to said landing gear **(6)** safely and said landing gear **(6)** to be precisely positioned in said receiving space **(21)** of said vehicle **(1),** where a receiving device **(7)** is provided that independently pulls said landing gear **(6)** into said receiving space **(21).**

2. The system for maneuvering aircraft **(2)** as in claim 1, **characterized in that** said receiving device **(7),** aided by sensors, independently pulls in said landing gear **(6).**

3. The system for maneuvering aircraft **(2)** as in claim 1, **characterized in that** sensors on said vehicles **(1)** and / or at or in said transfer area **(4)** are provided to increase the positional accuracy of said vehicles **(1)** as they approach the landing gears **(6)** of said aircraft **(2).**

4. The system for maneuvering aircraft **(2)** as in claim 1, **characterized in that** the axles of said vehicles **(1)** can be switched between different steering modes as the situation demands.

5. The system for maneuvering aircraft **(2)** as in claim 1, **characterized in that** said vehicles **(1)** are equipped with a wireless communication and control unit, by means of which said vehicles **(1)** are able to independently control all the functions of the aircraft **(2)** that are required for the maneuvers, such as, for example, unlocking the nose gear steering and actuating the barking brake.

6. The system for maneuvering aircraft **(2)** as in claim 1, **characterized in that** said vehicles **(1)** have an auxiliary driver's console that enables said vehicles **(1)** to be operated manually.

7. The system for maneuvering aircraft **(2)** as in claim 1, **characterized in that** said vehicles **(1)** can be refueled or recharged automatically at at least one station **(12).**

## Revendications

1. Système utilisé pour la manoeuvre d'aéronefs **(2)** au sol entre les aires de transit **(4)** qui sont disponibles aussi bien pour les aéronefs **(2)** qui ont atterri que pour ceux qui sont prêts au décollage et les positions de destination /de stationnement servant à l'embarquement des aéronefs **(2),** ce système comprenant des véhicules **(1)** qui, par des procédés optiques ou inductifs, par transpondeurs, repères magnétiques, GPS, ou à partir d'une combinaison des procédés mentionnés, sont de nature à pouvoir être navigués sans pilote sur un aérodrome et à pouvoir y être conduits sans collision ni conflit par un système de guidage et de gestion, **caractérisé en ce que** les véhicules **(1),** en tant que véhicules de remorquage sans barre, sont équipés d'un espace de logement **(21)** ainsi que d'un dispositif **(7)** permettant la réception autonome du train d'atterrissage **(6)** dans l'espace de logement **(21)** de chaque véhicule **(1)** et sont prévus pour approcher leur espace de logement **(21)** du train d'atterrissage **(6)** et qu'ils sont munis à cet effet de capteurs permettant une approche sécurisée des véhicules **(1)** vers le train d'atterrissage **(6)** et un positionnement précis du train d'atterrissage **(6)** dans l'espace de logement **(21)** du véhicule **(1),** espace dans lequel est prévu un dispositif de réception **(7)** qui fait rentrer le train d'atterrissage **(6)** de manière autonome dans l'espace de logement.

2. Système utilisé pour la manoeuvre d'aéronefs **(2)** selon la revendication 1, **caractérisé en ce que** le dispositif de réception **(7)** fait rentrer le train d'atterrissage **(6)** de manière autonome avec l'assistance de capteurs.

3. Système utilisé pour la manoeuvre d'aéronefs **(2)** selon la revendication 1, **caractérisé en ce que** des capteurs sont prévus sur le véhicule **(1)** et / ou sur ou dans l'aire de transit **(4)** afin d'augmenter la précision de positionnement des véhicules **(1)** lors de l'approche vers les trains d'atterrissage **(6)** des aéronefs **(2).**

4. Système utilisé pour la manoeuvre d'aéronefs **(2)** selon la revendication 1, **caractérisé en ce que** les essieux des véhicules **(1)** sont commutables entre différents modes de pilotage en fonction de la situation.

5. Système utilisé pour la manoeuvre d'aéronefs **(2)** selon la revendication 1, **caractérisé en ce que** les véhicules **(1)** sont équipés d'une unité de communication et de commande sans fil par l'intermédiaire de laquelle les véhicules **(1)** peuvent commander de manière autonome la totalité des fonctions de l'aéronef **(2)** nécessaires aux manoeuvres, comme par exemple le déverrouillage de la direction du train d'atterrissage avant et l'actionnement du frein de stationnement.

6. Système utilisé pour la manoeuvre d'aéronefs **(2)** selon la revendication 1, **caractérisé en ce que** les véhicules **(1)** disposent d'un poste de contrôle auxiliaire permettant une conduite manuelle des véhicules **(1).**

7. Système utilisé pour la manoeuvre d'aéronefs **(2)** selon la revendication 1, **caractérisé en ce qu'**il est possible de procéder automatiquement au ravitaillement en carburant ou à la recharge des véhicules **(1)** en au moins une station **(12).**
